# NEUE EUROPÄISCHE PATENTSCHRIFT

(11) **EP 3 060 440 B2**
(45) Veröffentlichungstag und Bekanntmachung des Hinweises auf die Entscheidung über den Einspruch: **08.11.2023**
(45) Hinweis auf die Patenterteilung: 22.07.2020
(21) Anmeldenummer: 14777008.5
(22) Anmeldetag: 26.09.2014
(51) Int. Cl.: B60T 15/18

(54) **RELAISVENTIL, VENTILEINRICHTUNG SOWIE FAHRZEUG DAMIT**
RELAY VALVE, VALVE ARRANGEMENT AND VEHICLE
SOUPAPE DE RELAIS, ARRANGEMENT DE VALVES ET VÉHICULE

(30) Priorität: 26.10.2013 DE 102013017875
(43) Veröffentlichungstag der Anmeldung: 31.08.2016
(73) Patentinhaber: ZF CV Systems Hannover GmbH, 30453 Hannover (DE)
(72) Erfinder: SIEKER, Armin, 33611 Bielefeld (DE)
(74) Vertreter: Rabe, Dirk-Heinrich
(86) Internationale Anmeldenummer: PCT/EP2014/002620
(87) Internationale Veröffentlichungsnummer: WO 2015/058828

(56) Entgegenhaltungen:
- EP-A1- 1 844 999
- CN-A- 101 716 927
- DE-A1- 2 810 850
- DE-A1- 2 918 032
- DE-A1- 2 918 032
- DE-A1- 4 305 679
- DE-A1- 10 238 182
- US-A- 4 018 485

## Beschreibung

Die Erfindung betrifft ein Relaisventil für eine Druckluftanlage, eine Ventileinrichtung mit dem Relaisventil sowie ein Fahrzeug mit dem Relaisventil und/oder mit der Ventileinrichtung.

Relaisventile gemäß dem Stand der Technik steuern mit sehr kleinen Druckluftmengen sehr große Druckluftmengen, beispielsweise für Bremszylinder einer Druckluftbremse eines Fahrzeugs. Das Relaisventil beschleunigt somit das Be- und Entlüften der Bremszylinder.

Hierfür weisen derartige Relaisventile üblicherweise einen als Steuerkolben arbeitenden Relaisventilkolben auf, der auf der einen Seite über eine Steuerkammer mit Steuerdruck beaufschlagbar ist und auf der anderen Seite über einen Druckmittelausgang mit einem von einem Verbraucher bereitgestellten Arbeitsdruck beaufschlagbar ist.

Zwischen einer über einen Druckmitteleingang mit einer Druckmittelquelle verbindbaren Belüftungskammer und einer über den Druckmittelausgang mit einem Verbraucher verbindbaren Arbeitskammer ist ein Einlassventil eingeordnet. Zwischen der Arbeitskammer und einer zur Atmosphäre führenden Entlüftungskammer ist ein Auslassventil eingeordnet.

Wird die Steuerkammer mit einem Steuerdruck beaufschlagt, bewegt sich der Relaisventilkolben in die Arbeitskammer hinein. Durch die Bewegung des Relaisventilkolbens wird erst das Auslassventil verschlossen und anschließend das Einlassventil geöffnet. Dadurch wird in der Arbeitskammer ein Druck aufgebaut, welcher an dem Relaisventilkolben dem Steuerdruck entgegenwirkt.

Bei Vorliegen eines Gleichgewichts der gegeneinander wirkenden Drücke, wird der Relaisventilkolben entgegen seiner ursprünglichen Bewegung zurückgeschoben. Es schließt sich das Einlassventil, ohne dass sich das Auslassventil öffnet, so dass der Druck in der Arbeitskammer und unter dem Druckmittelausgang erhalten bleibt.

Bei einer Entlüftung der Steuerkammer wird der Relaisventilkolben weiter entgegengesetzt seiner ursprünglichen Bewegungsrichtung verschoben und das Auslassventil öffnet sich, bis der Druck in der Arbeitskammer auf einen Wert abgesunken ist, bei dem wieder Kräftegleichgewicht am Relaisventilkolben herrscht und das Auslassventil wieder geschlossen ist. Bei einer vollständigen Entlüftung der Steuerkammer werden auch die Arbeitskammer und somit auch die nachgeschalteten Verbraucher vollständig entlüftet. Ein derartig arbeitendes Relaisventil ist beispielsweise aus EP 1 844 999 A1 bekannt.

Bei einer derartigen Arbeitsweise des Relaisventils, steht der am Druckmittelausgang ausgesteuerte Druck in einem bauteilbedingten Verhältnis zum Steuerdruck. Wird beispielsweise eine 1:1-Kennung des Relaisventils gewünscht, ist eine Konstruktion notwendig, bei der die Wirkfläche des Relaisventilkolbens auf der Steuerseite und der Arbeitsseite gleich sind. Dies wird herkömmlicherweise durch eine in den Gehäusedeckel eingebrachte Kolbenführung erreicht. Diese Kolbenführung im Gehäusedeckel muss jedoch gegenüber dem Relaisventilkolben abgedichtet werden, wodurch eine mechanische Bearbeitung des Gehäusedeckels zwingend erforderlich ist, um die Reibungsverluste an den Dichtelementen möglichst gering zu halten und die Dichtigkeit zu gewährleisten.

Diese bekannten Relaisventile sind zusammen mit weiteren Komponenten üblicherweise in einer Ventileinrichtung integriert. Dabei kann die Ventileinrichtung beispielsweise eine elektronische Luftaufbereitungseinrichtung, eine elektromagnetische Feststellbremseinrichtung oder ein Achsmodulator sein.

Der Erfindung liegt nach alledem das Problem zugrunde, ein derartiges Relaisventil bzw. Ventileinrichtung zu verbessern, insbesondere eine kostengünstige Konstruktion des Relaisventils zu ermöglichen.

Die Erfindung löst diese Aufgabe mit einem Relaisventil nach Anspruch 1, einer Ventileinrichtung nach Anspruch 8, einem Fahrzeug nach Anspruch 10 sowie einer Verwendung eines Relaisventils nach Anspruch 11.

Das erfindungsgemäße Relaisventil ist ein luftmengenverstärkendes Ventil, welches Druckluft gemäß einem anliegenden Steuerdruck aussteuert und bereitstellt. Die gemäß Steuerdruck ausgesteuerte Druckluft kann dabei mit vergleichsweise größerer Luftmenge in kurzer Zeit bereitgestellt werden.

Dazu weist das Relaisventil ein Gehäuse auf, welches einen mit einer Druckmittelquelle verbindbaren Eingang, wenigstens einen mit einem Verbraucher verbindbaren Druckmittelausgang, wenigstens einen Steuereingang sowie wenigstens eine zur Atmosphäre führende Entlüftung aufweist.

Das Relaisventil weist ferner einen Relaisventilkolben auf, welcher in dem Gehäuse entlang einer Relaisventilachse verschiebbar angeordnet ist.

Das erfindungsgemäße Relaisventil zeichnet sich durch ein erstes Dichtelement und ein zweites Dichtelement zum Abdichten des Relaisventilkolbens gegenüber dem Gehäuse aus. Dabei ist das erste Dichtelement am Gehäuse fest montiert und gleitet bei Bewegung des Relaisventilkolbens an diesem Relaisventilkolben. Das zweite Dichtelement ist an dem Relaisventilkolben fest angeordnet und gleitet bei Bewegung des Relaisventilkolbens am Gehäuse.

Bevorzugt sind die Dichtelemente als Z-Ring oder als O-Ring ausgebildet und in einer umlaufenden Nut am Relaisventilkolben bzw. am Gehäuse angeordnet.

Das erste Dichtelement, das zweite Dichtelement, der Relaisventilkolben und das Gehäuse begrenzen einen zwischen den beiden Dichtelementen befindlichen Ringraum, wobei der Ringraum mit der Atmosphäre verbunden ist, um einen gegenüber dem Atmosphärendruck erhöhten Druck im Ringraum zu vermeiden, indem eine Entlüftung des Ringraums in die Atmosphäre stattfindet.

Die Abmessungen des Relaisventilkolbens sind erfindungsgemäß derart gewählt, um ein vorbestimmtes Verhältnis von Steuerdruck und Arbeitsdruck einzuhalten, wobei dieses Verhältnis durch die Wirkfläche am Relaisventilkolben vorgegeben wird. Ist beispielsweise eine 1:1-Kennung des Relaisventils gefordert, muss der Ringraum derart dimensioniert werden, dass die Wirkfläche des Ringraumes gleich groß der Wirkfläche aus dem Entlüftungssitz des Relaisventilkolbens ist. Durch die Dimensionierung des Ringraumes lässt sich vorteilhaft besonders einfach ein Verhältnis von Steuerdruck und Arbeitsdruck vorgeben, welches auch übersetzend oder untersetzend sein kann.

Das erfindungsgemäße Relaisventil hat den Vorteil, dass auf die kostenintensive Herstellung eines Gehäusedeckels mit einer Kolbenführung verzichtet werden kann. Somit weist der Relaisventilkolben eine kreisförmige Relaisventilkolbenoberseite auf, wodurch keine Kolbenführung im Gehäusedeckel mit zusätzlichen Dichtelementen notwendig ist. Dadurch entsteht der Vorteil, dass der Deckel des Relaisventils kostengünstig herstellbar ist, da auf eine aufwändige mechanische Bearbeitung nunmehr verzichtet werden kann.

Ferner lässt sich der Deckel kostengünstig aus Kunststoff herstellen, da er nunmehr nicht den direkten Beanspruchungen des Relaisventilkolbens ausgesetzt ist.

Gemäß einer bevorzugten Ausführungsform der Erfindung ist das erfindungsgemäße Gehäuse aus einem ersten Gehäuseteil und einem zweiten Gehäuseteil ausgebildet, wobei das zweite Gehäuseteil als flächig ausgebildeter Deckel konstruiert ist, welcher dichtend mit dem ersten Gehäuseteil verbunden ist. Dies ermöglicht vorteilhaft eine besonders einfache und kostengünstige Herstellung des Relaisventils.

Eine Verbindung des Ringraumes mit Atmosphäre ist mittels einer axialen Bohrung in dem Relaisventilkolben vorgesehen, wobei die axiale Bohrung in eine Entlüftungskammer führt. Ferner erfolgt die Verbindung des Ringraumes mit Atmosphäre über einen Kanal in dem Relaisventilkolben, welcher derart ausgebildet ist, um die axiale Bohrung mit dem Ringraum zu verbinden.

Durch die erfindungsgemäße Entlüftung des Ringraumes, beispielsweise durch den Relaisventilkolben in die Entlüftungskammer, ist vorteilhaft eine freie Bewegung des Relaisventilkolbens möglich, ohne in dem Ringraum unerwünscht einen Über- bzw. Unterdruck bei Bewegung des Relaisventilkolbens zu erzeugen, denn ein derartiger Über- bzw. Unterdruck würde die Steuerung des Ventils nachhaltig verfälschen.

In einer weiteren bevorzugten Ausführungsform der Erfindung ist die Größe des Ringraumes derart angepasst, um ein vorbestimmtes Verhältnis, insbesondere ein 1:1-Verhältnis, von einem an dem Druckmittelausgang vorliegenden Druck zu einem an dem Steuereingang vorliegenden Steuerdruck zu erzeugen.

Der am Druckmittelausgang ausgesteuerte Druck steht in einem bauartbedingten Verhältnis zum Steuerdruck, welches im Wesentlichen 1:1 oder übersetzend oder untersetzend sein kann. Das Verhältnis wird hierbei durch das Verhältnis der Wirkflächen am Relaisventilkolben vorgegeben. Die Wirkfläche des Ringraumes ist bei einem 1:1-Verhältnis des Relaisventils aufgrund der Durchmesserdifferenz gleich groß und entgegengesetzt der Wirkfläche, die aus dem Entlüftungssitz gebildet wird. Durch geeignete Dimensionierung des Ringraumes kann das Verhältnis vorteilhaft individuell angepasst werden.

Gemäß einer weiteren bevorzugten Ausführungsform der Erfindung ist ein Teil einer mit dem Steuereingang verbundenen Steuerkammer als ein Dämpfungsvolumen abgetrennt. Die Steuerkammer und das Dämpfungsvolumen sind dabei über eine Drossel miteinander verbunden.

Bedingt durch die Beaufschlagung der Steuerkammer mit einem Druckmittel kann das Problem auftreten, dass der Relaisventilkolben durch die Ansteuerung mit Druckmittel in Schwingung versetzt wird, da der Relaisventilkolben zusammen mit einer Feder ein schwingungsfähiges System darstellt.

Eine mögliche Ausgestaltung zur Vermeidung von Schwingungen des Relaisventilkolbens ist in DE 102 38 182 A1 gezeigt. Hier ist in der Arbeitskammer eine abgedichtete Zwischenwand vorgesehen, die eine Einrichtung zum Druckausgleich aufweist. Die Zwischenwand hat dabei die Funktion einer Prallwand und schirmt den Relaisventilkolben vor den dynamischen Gasströmungskräften ab. Nachteilig erweisen sich hierbei jedoch unerwünschte ausgeprägte Druckspitzen in Abhängigkeit der Größe der angeschlossenen Verbraucher.

Durch die erfindungsgemäße Aufteilung der Steuerkammer kommt es vorteilhaft zu einer Dämpfung des Relaisventilkolbens bei Beaufschlagung der Steuerkammer mit einem Steuerdruck. Durch die Dämpfung werden vorteilhaft die Schwingungen des Relaisventilkolbens verhindert, wobei die Dämpfung in Abhängigkeit der verwendeten Drossel und Größe der Volumen erfolgt.

In einer weiteren bevorzugten Ausführungsform erfolgt die Abtrennung des Dämpfungsvolumens von der Steuerkammer über eine Blende und eine Öffnung in der Blende, wobei die Öffnung der Blende derart bemessen ist, dass sie als Drossel wirkt. Eine Abtrennung mittels einer Blende ist vorteilhaft einfach herstellbar.

In einer alternativen Ausführungsform der Erfindung ist das Dämpfungsvolumen innerhalb des Relaisventilkolbens angeordnet, wobei das Dämpfungsvolumen und eine mit dem Steuereingang verbundene Steuerkammer über eine Drossel miteinander verbunden sind.

Auch bei dieser Anordnung des Dämpfungsvolumens sorgt die Drossel vorteilhaft dafür, dass Schwingungen des Relaisventilkolbens bei Druckbeaufschlagung der Steuerkammer vermieden werden.

Ferner wird vorteilhaft das Volumen des Relaisventilkolbens genutzt und bei der Herstellung Material eingespart.

Bei einer korrekten Auslegung des Dämpfungsvolumens und der Größe der Drossel kommt es zu einer reibungsunabhängigen Eigendämpfung des Systems, wodurch vorteilhaft das Schwingungsverhalten des Relaisventilkolbens unterbunden wird.

Ferner wird o. g. Aufgabe durch eine Ventileinrichtung für eine Druckluftanlage gelöst, wobei die Ventileinrichtung das erfindungsgemäße Relaisventil aufweist. Dabei ist die Ventileinrichtung bevorzugt eine elektronische Luftaufbereitungseinrichtung, eine elektromagnetische Feststellbremseinrichtung oder beispielsweise ein Achsmodulator oder auch eine andere Einrichtung für eine Druckluftanlage.

Alternativ dazu kann die Ventileinrichtung auch in anderen Druckluftanlagen eines Fahrzeugs, beispielsweise Nutzfahrzeugs, vorgesehen sein.

In einer Weiterentwicklung der Ventileinrichtung ist wenigstens ein weiteres Relaisventil in einem Ventilblock angeordnet, wobei die Relaisventile bspw. über eine gemeinsame Entlüftungskammer miteinander verbunden sind.

Die Relaisventile können dabei nahe beieinander im Ventilblock angeordnet sein, wodurch sich vorteilhaft ein geringeres Gewicht durch geringere Abmessungen des Ventilblocks ergibt. Durch die Materialeinsparung ergeben sich vorteilhaft geringere Herstellungskosten.

Gemäß einem alternativen Ausführungsbeispiel weisen die Relaisventile einen gemeinsamen Anschluss zur Verbindung mit einem Druckluftversorger auf, wodurch vorteilhaft ein zweiter Anschluss entfällt.

Die Erfindung löst das ihr zugrunde liegende Problem ferner mit einem Fahrzeug, insbesondere einem Nutzfahrzeug, welches wenigstens ein erfindungsgemäßes Relaisventil und/oder wenigstens eine erfindungsgemäße Ventileinrichtung aufweist.

Schließlich betrifft die Erfindung die Verwendung eines Relaisventils für eine Druckluftanlage in einem Kraftfahrzeug, insbesondere eine Druckluftbremsanlage in einem Lastkraftwagen. Dabei ist das Relaisventil erfindungsgemäß ausgebildet und kann in einer erfindungsgemäßen Ventileinrichtung eingesetzt werden.

Weitere Ausführungsformen ergeben sich aus den Ansprüchen sowie aus den anhand der Zeichnung näher erläuterten Ausführungsbeispielen. In der Zeichnung zeigen:
- Fig. 1: ein Relaisventil gemäß dem Stand der Technik,
- Fig. 2: ein Relaisventil gemäß einem Ausführungsbeispiel der Erfindung,
- Fig. 3: ein Relaisventil gemäß einem weiteren Ausführungsbeispiel der Erfindung mit einem vorgeschalteten Dämpfungsvolumen,
- Fig. 4: ein Relaisventil gemäß einem weiteren Ausführungsbeispiel der Erfindung mit einem nachgeschalteten Dämpfungsvolumen und
- Fig. 5: ein pneumatisches Schaltbild eines EBS-Anhängermodulators.

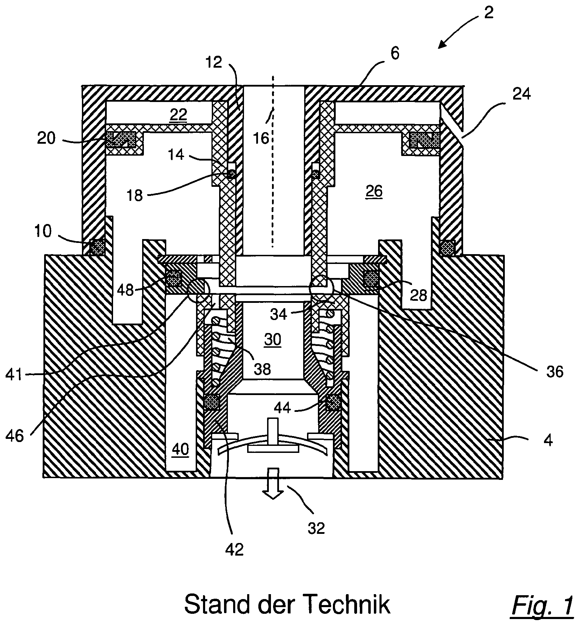

Fig. 1 zeigt ein Relaisventil 2 gemäß dem Stand der Technik, mit einem Gehäuse, welches aus einem ersten Gehäuseteil 4 und einem zweiten Gehäuseteil 6 gebildet wird. Beide Gehäuseteile 4, 6 sind miteinander fest verbunden und mittels eines Dichtelementes 10 gegeneinander abgedichtet.

Das zweite Gehäuseteil 6 weist eine weit nach innen hineinragende Relaisventilkolbenführung 12 auf, in der ein Relaisventilkolben 14 entlang einer Relaisventilkolbenachse 16 verschiebbar angeordnet ist. Ein Dichtring 18 dichtet den zweiten Gehäuseteil 6 gegen den verschiebbar angeordneten Relaisventilkolben 14 ab.

An den Randseiten des zweiten Gehäuseteils 6 verläuft ein als Z-Ring ausgebildeter Dichtring 20, welcher ebenfalls zur Abdichtung gegenüber dem verschiebbar angeordneten Relaisventilkolben 14 dient.

Oberhalb des Relaisventilkolbens 14 ist eine Steuerkammer 22 angeordnet, die von dem Relaisventilkolben 14 und dem zweiten Gehäuseteil 6 begrenzt wird. Durch eine Steuerdruckleitung 24 kann ein Steuerdruck in die Steuerkammer 22 geführt werden.

Das Relaisventil 2 gemäß Fig. 1 ist in einer Entlüftungsposition dargestellt. Dazu gelangt Druckluft von einer Arbeitskammer 26 an einen Einsatz 28 vorbei in eine Entlüftungskammer 30, die über einen Ausgang 32 mit der Atmosphäre verbunden ist, so dass die zu entlüftende Druckluft durch die Entlüftungskammer 30 entweichen kann.

In dieser Position übersteigt der Druck in der Arbeitskammer 26 den Druck in der Steuerkammer 22 oder die beiden Drücke befinden sich im Gleichgewicht.

Die Arbeitskammer 26 weist einen hier nicht dargestellten Druckmittelausgang auf, durch welchen sie mit einem Verbraucher, beispielsweise einem Bremszylinder, pneumatisch verbunden sein kann.

Ist der Druck in der Arbeitskammer 26 mindestens so groß wie der Steuerdruck in der Steuerkammer 22, wird Druckluft von einem Verbraucher entlüftet. Sobald jedoch der Steuerdruck in der Steuerkammer 22 geringfügig höher ist als der Druck der Arbeitskammer 26, nimmt der Relaisventilkolben 14 eine Neutralposition ein. In der Neutralposition ist ein Spalt zwischen dem Relaisventilkolben 14 und einen Belüftungskolben 34 verschlossen, so dass ein Auslassventil 36 die Arbeitskammer 26 von der Entlüftungskammer 30 pneumatisch absperrt.

Der Belüftungskolben 34 ist bevorzugt mit einem Gummi umspritzt und wird von einer Feder 38 in seiner Position gehalten.

Wird der Steuerdruck in der Steuerkammer 22 weiter erhöht, wird der Relaisventilkolben 14 in eine Belüftungsposition bewegt, wobei der Steuerdruck gegenüber dem Arbeitsdruck groß genug ist, um sowohl den Relaisventilkolben 14 gegen seine Reibkraft an den Dichtringen 18 und 20 als auch den Belüftungskolben 34 gegen die Federkraft der Feder 38 zu bewegen.

In dieser Position entsteht ein Spalt zwischen dem Belüftungskolben 34 und dem Einsatz 28, welcher eine Belüftungskammer 40 pneumatisch mit der Arbeitskammer 26 verbindet und somit ein Einlassventil 41 öffnet. Die Belüftungskammer 40 wird über einen hier nicht dargestellten Druckmitteleingang von einer Druckmittelquelle mit Druckluft versorgt.

Der Belüftungskolben 34 und die Feder 38 werden von einem Trägerelement 42 getragen, welches in das erste Gehäuseteil 4 eingesetzt ist und mittels eines Dichtrings 44 abgedichtet ist.

Eine Öffnung 46 sorgt für einen Druckausgleich in dem die Feder 38 aufweisenden Raum. Ein weiterer Dichtring 48 dichtet das erste Gehäuseteil 4 gegen den Einsatz 28 bzw. die Belüftungskammer 40 gegen die Arbeitskammer 26 pneumatisch ab.

Um die Reibkräfte des Relaisventilkolbens 14 an dem zweiten Gehäuseteil 6 durch die Dichtungen 18 und 20 möglichst gering zu halten und die Dichtigkeit zu gewährleisten, muss das zweite Gehäuseteil 6 nachteilig mechanisch aufwendig bearbeitet werden, um eine hohe Oberflächengüte zu erzielen.

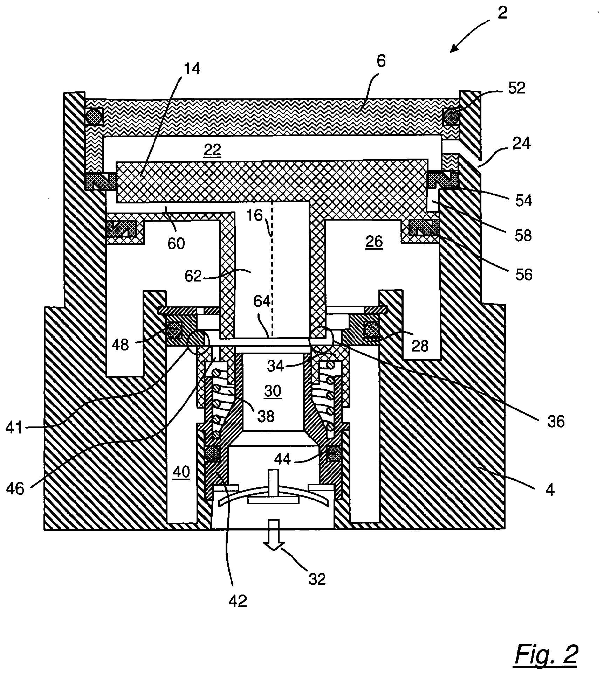

Fig. 2 zeigt eine Ausführung eines erfindungsgemäßen Relaisventils 2, bei der erfindungsgemäß das zweite Gehäuseteil 6 als flächig ausgebildeter Deckel konstruiert ist, welcher mittels eines Dichtringes 52 dichtend mit dem ersten Gehäuseteil 4 verbunden ist.

Zwischen dem zweiten Gehäuseteil 6 und dem ersten Gehäuseteil 4 ist auf einem Versatz aufliegend ein erstes Dichtelement 54, insbesondere in Z-Ring, angeordnet, welcher den Relaisventilkolben 14 gegenüber dem ersten Gehäuseteil 4 abdichtet. Dabei ist das Dichtelement 54 gehäusefest montiert und gleitet bei Bewegung des Relaisventilkolbens 14 auf diesem Relaisventilkolben 14.

In einer umlaufenden Nut im Relaisventilkolben 14 ist ein zweites Dichtelement 56 angeordnet, welches fest am Relaisventilkolben 14 anliegt und im ersten Gehäuseteil 4 gleitet.

Von dem Relaisventilkolben 14, dem ersten Gehäuseteil 4 und den beiden Dichtelementen 54 und 56 wird ein Ringraum 58 begrenzt, welcher über einen Kanal 60 und eine axiale Bohrung 62 im Relaisventilkolben 14 mit der Atmosphäre verbunden ist.

Das in Fig. 2 dargestellte Relaisventil 2 weist eine 1:1-Kennung auf, indem der Ringraum 58 derart dimensioniert ist, dass dessen Wirkfläche aufgrund der Durchmesserdifferenz gleich groß und entgegengesetzt der Wirkfläche ist, die aus dem Entlüftungssitz 64 gebildet wird.

Eine derartige Ausführungsform der Erfindung weist vorteilhaft die gewünschte Flächengleichheit von Steuerseite und Leistungsseite auf, bei der lediglich das erste Gehäuseteil 4 eine mechanische Bearbeitung erfordert, da nur hier zwischen dem Gehäuseteil 4 und dem Relaisventilkolben 14 gleitende Dichtelemente 54 und 56 vorgesehen sind. Der als Deckel ausgebildete zweite Gehäuseteil 6 ist besonders einfach und kostengünstig herstellbar, insbesondere aus kostengünstigem Kunststoff.

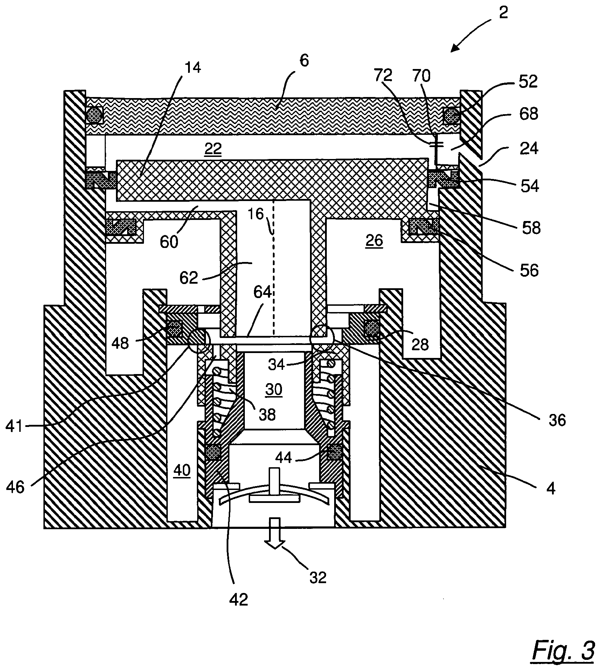

Fig. 3 zeigt ein Relaisventil 2, gemäß einem weiteren Ausführungsbeispiel der Erfindung mit einem vorgeschalteten Dämpfungsvolumen 68. Zur Abtrennung der Steuerkammer 22 von dem Dämpfungsvolumen 68 ist in die Steuerkammer 22 eine Blende 70 eingesetzt, wobei die Blende 70 eine als Drossel wirkende Öffnung 72 aufweist. Dabei kann die Blende 70 separat ausgebildet sein und in die Steuerkammer 22 geklebt oder verschweißt werden, oder bei der Konstruktion des als Deckel ausgebildeten zweiten Gehäuseteils 6 berücksichtigt werden. Dabei sollte die Öffnung 72 in der Blende 70 derart bemessen sein, dass Schwingungen des Relaisventilkolbens 14 vorteilhaft vermieden werden.

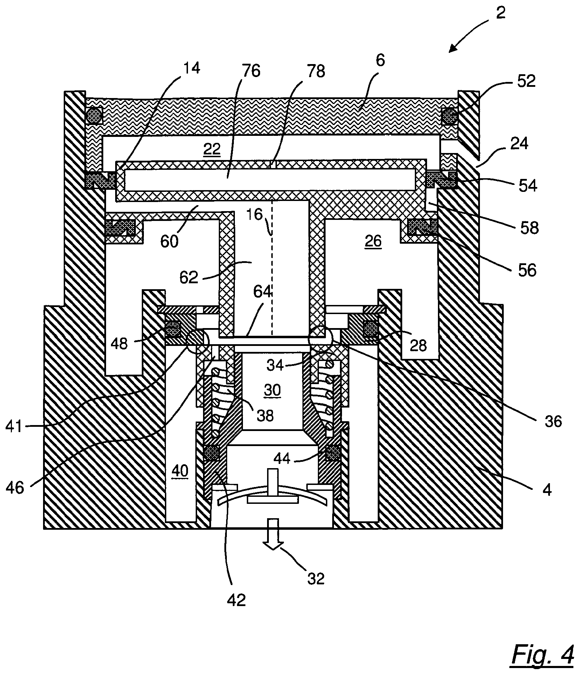

Fig. 4 zeigt ein Relaisventil 2 gemäß einem weiteren Ausführungsbeispiel der Erfindung mit einem nachgeschalteten Dämpfungsvolumen 76. Erfindungsgemäß ist dieses Dämpfungsvolumen 76 in dem Relaisventilkolben angeordnet und mit einer Drossel 78 mit der Steuerkammer 22 verbunden. Bei korrekter Auslegung des Dämpfungsvolumens 76 und der Größe der Drossel 78 kann auch hier vorteilhaft das Schwingungsverhalten des Relaisventilkolbens 14 unterbunden werden.

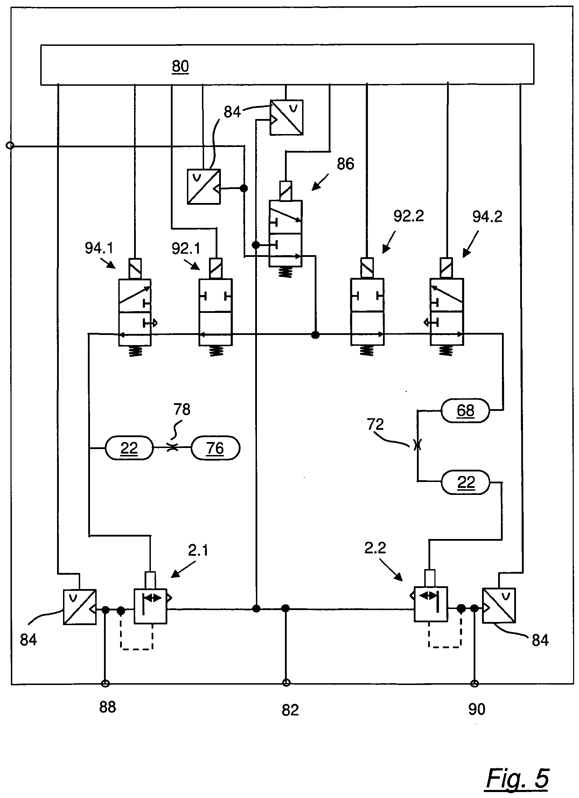

Fig. 5 zeigt ein pneumatisches Schaltbild zur Erläuterung der erfindungsgemäßen Verwendung eines vor- bzw. nachgeschalteten Dämpfungsvolumens 68, 76 am Beispiel eines EBS-Anhängermodulators. Der Einfachheit halber ist hier jeweils ein vor- und ein nachgeschaltetes Dämpfungsvolumen 68, 76 gezeigt. Bevorzugt wird jedoch ein symmetrischer Aufbau aus zwei vor- oder zwei nachgeschalteten Dämpfungsvolumen 68 oder 76 umgesetzt. Eine asymmetrische Anordnung entsprechend Fig. 5 ist jedoch nicht ausgeschlossen.

Der vereinfacht dargestellte EBS-Anhängermodulator weist zunächst eine Steuerelektronik (ECU) 80 auf, mit der die Komponenten des Modulators elektrisch verbunden sind.

Ferner weist der Modulator einen Anschluss 82 auf, über den der Modulator mit Vorratsdruck versorgt wird. Darüber hinaus sind neben mehreren Komponenten eine Mehrzahl an Drucksensoren 84 mit der Steuerelektronik 80 verbunden sowie ein Redundanzventil 86 vorgesehen.

Zum Ansteuern von zwei Verbraucherausgängen 88 und 90 sind zwei erfindungsgemäße Relaisventile 2.1 und 2.2 vorgesehen, wobei dem ersten Relaisventil 2.1 ein Dämpfungsvolumen 76 nachgeschaltet ist und dem zweiten Relaisventil 2.2 ein Dämpfungsvolumen 68 vorgeschaltet ist.

Das erste Relaisventil 2.1 wird über ein Einlassventil 92.1 und ein Auslassventil 94.1 angesteuert, wobei die Ventile 92.1 und 94.1 separat mit der Steuerelektronik 80 verbunden sein können, um den Druck zu halten, oder einen gemeinsamen Anschluss an die Steuerelektronik 80 aufweisen, wobei dann nur ein Be- und Entlüften der Druckleitung mittels der Ventile 92.1 und 94.1 möglich ist.

Die Ansteuerung des Relaisventils 2.1 erfolgt über ein nachgeschaltetes Dämpfungsvolumen 76, welches über eine Verbindungsdrossel 78 mit der Steuerkammer 22 des Relaisventils 2.1 verbunden ist.

Die Ansteuerung des zweiten Relaisventils 2.2 erfolgt ebenfalls über ein Einlassventil 92.2 und ein Auslassventil 94.2, die analog zu den Ventilen 92.1 und 94.1 mit der Steuerelektronik 80 verbunden sind.

Der von dem Auslassventil 94.2 bereitgestellte Steuerdruck gelangt über ein vorgeschaltetes Dämpfungsvolumen 68, welches über eine Verbindungsdrossel 72 mit der Steuerkammer 22 des Relaisventils 2.2 verbunden ist in das Relaisventil 2.2.

Die Verwendung zweier Relaisventile 2.1 und 2.2 in einem EBS-Anhängermodul mit zwei vor- oder zwei nachgeschalteten Dämpfungsvolumen 68 oder 76 hat den Vorteil, das zerstörende Schwingungsverhalten der Relaisventile 2.1 und 2.2 zu unterbinden. Erfindungsgemäß sind die Volumen der Dämpfungsvolumen 68, 76 sowie die Größe der Verbindungsdrosseln 72, 78 derart bemessen, dass es zu einer reibungsunabhängigen Eigendämpfung der jeweiligen Systeme kommt.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Relaisventil für eine Druckluftanlage mit einem Gehäuse, welches einen mit einer Druckmittelquelle verbindbaren Druckmitteleingang, wenigstens einen mit einem Verbraucher verbindbaren Druckmittelausgang, wenigstens einen Steuereingang sowie wenigstens eine zur Atmosphäre führende Entlüftung (32) aufweist und mit einem Relaisventilkolben (14), welcher in dem Gehäuse entlang einer Relaisventilkolbenachse (16) verschiebbar angeordnet ist,
mit einem ersten Dichtelement (54) zum Abdichten des Relaisventilkolbens (14) gegenüber dem Gehäuse, wobei das erste Dichtelement (54) am Gehäuse festgelegt ist,
mit einem zweiten Dichtelement (56) zum Abdichten des Relaisventilkolbens (14) gegenüber dem Gehäuse, wobei das zweite Dichtelement (56) an dem Relaisventilkolben (14) fest angeordnet ist,
mit einem Ringraum (58), welcher von dem ersten Dichtelement (54), dem zweiten Dichtelement (56), dem Relaisventilkolben (14) und dem Gehäuse begrenzt wird, und
mit einer Verbindung des Ringraums (58) mit der Atmosphäre, **gekennzeichnet durch**
eine Verbindung des Ringraumes (58) mit Atmosphäre mittels einer axialen Bohrung (62) in dem Relaisventilkolben (14), welche in eine Entlüftungskammer (30) führt und
einem Kanal (60) in dem Relaisventilkolben (14), welcher derart ausgestaltet ist, um die axiale Bohrung (62) mit dem Ringraum (58) zu verbinden.

2. Relaisventil nach Anspruch 1,
**gekennzeichnet durch**
eine zweiteilige Ausführung des Gehäuses aus einem ersten Gehäuseteil (4) und einem zweiten Gehäuseteil (6), wobei das zweite Gehäuseteil (6) als flächig ausgebildeter Deckel konstruiert ist, welcher dichtend mit dem ersten Gehäuseteil (4) verbunden ist.

3. Relaisventil nach einem der vorhergehenden Ansprüche,
**gekennzeichnet durch**
eine Anpassung der Größe des Ringraumes (58) derart, um ein vorbestimmtes Verhältnis, insbesondere ein 1:1-Verhältnis, von einem an dem Druckmittelausgang vorliegenden Druck zu einem an dem Steuereingang vorliegenden Steuerdruck zu erzeugen.

4. Relaisventil nach einem der vorhergehenden Ansprüche,
**dadurch gekennzeichnet, dass**
ein Teil einer mit dem Steuereingang verbundenen Steuerkammer (22) als ein Dämpfungsvolumen (68) abgetrennt ist, wobei die Steuerkammer (22) und das Dämpfungsvolumen (68) über eine Drossel (72) miteinander verbunden sind.

5. Relaisventil nach Anspruch 4,
**dadurch gekennzeichnet, dass**
die Abtrennung des Dämpfungsvolumens (68) von der Steuerkammer (22) über eine Blende (70) erfolgt und eine Öffnung an der Blende als Drossel (72) wirkt.

6. Relaisventil nach einem der Ansprüche 1 bis 3,
**dadurch gekennzeichnet, dass**
ein Dämpfungsvolumen (76) im Relaisventilkolben (14) angeordnet ist, wobei das Dämpfungsvolumen (76) und eine mit dem Steuereingang verbundene Steuerkammer (22) über eine Drossel (78) miteinander verbunden sind.

7. Ventileinrichtung für eine Druckluftanlage,
**gekennzeichnet durch**
ein Relaisventil (2) nach einem der Ansprüche 1 bis 6.

8. Ventileinrichtung nach Anspruch 7,
**dadurch gekennzeichnet, dass**
wenigstens ein weiteres in einem Ventilblock angeordnetes Relaisventil (2) nach einem der Ansprüche 1 bis 6 angeordnet ist, wobei die Relaisventile (2) über eine gemeinsame Entlüftungskammer (30) verbunden sind.

9. Fahrzeug, insbesondere Nutzfahrzeug,
**gekennzeichnet durch**
wenigstens ein Relaisventil (2) nach einem der Ansprüche 1 bis 6 und/oder wenigstens eine Ventileinrichtung nach einem der Ansprüche 7 oder 8.

10. Verwendung eines Relaisventils (2) für eine Druckluftanlage in einem Kraftfahrzeug, insbesondere einer Druckluftbremsanlage in einem Lastkraftwagen,
**dadurch gekennzeichnet, dass**
das Relaisventil (2) nach einem der Ansprüche 1 bis 6 ausgebildet ist und das Relaisventil (2) in einer Ventileinrichtung gemäß Anspruch 7 oder in einem Fahrzeug gemäß Anspruch 9 eingesetzt wird.

## Claims

1. Relay valve for a compressed air system, with a housing comprising a pressure medium input which can be connected to a pressure medium source, at least one pressure medium output which can be connected to a consumer, at least one control input and at least one purge (32) leading to atmosphere, and with a relay valve piston (14) which is arranged in the housing displaceably along a relay valve piston axis (16),
having a first sealing element (54) for sealing the relay valve piston (14) against the housing, wherein the first sealing element (54) is fixed to the housing,
having a second sealing element (56) for sealing the relay valve piston (14) against the housing, wherein the second sealing element (56) is fixedly arranged on the relay valve piston (14),
having an annular chamber (58) which is delimited by the first sealing element (54), the second sealing element (56), the relay valve piston (14) and the housing, and
having a connection of the annular chamber (58) to the atmosphere,
**characterized by**
a connection of the annular chamber (58) to atmosphere by means of an axial bore (62) in the relay valve piston (14) which leads into a purge chamber (30), and
a channel (60) in the relay valve piston (14) which is configured to connect the axial bore (62) to the annular chamber (58).

2. Relay valve according to Claim 1, **characterized by** a two-part configuration of the housing with a first housing part (4) and a second housing part (6), wherein the second housing part (6) is constructed as a flat cover which is tightly connected to the first housing part (4).

3. Relay valve according to any of the preceding claims, **characterized by** an adaptation of the size of the annular chamber (58) so as to establish a predefined ratio, in particular a 1:1 ratio, of a pressure present at the pressure medium output to a control pressure present at the control input.

4. Relay valve according to any of the preceding claims, **characterized in that** a part of a control chamber (22) connected to the control input is separated off as a damping volume (68), wherein the control chamber (22) and the damping volume (68) are connected together via a choke (72).

5. Relay valve according to Claim 4, **characterized in that** the damping volume (68) is separated from the control chamber (22) via a diaphragm (70), and an opening in the diaphragm acts as the choke (72).

6. Relay valve according to any of Claims 1 to 3, **characterized in that** a damping volume (76) is arranged in the relay valve piston (14), wherein the damping volume (76) and a control chamber (22) connected to the control input are connected together via a choke (78).

7. Valve device for a compressed air system, **characterized by** a relay valve (2) according to any of Claims 1 to 6.

8. Valve device according to Claim 7, **characterized in that** at least one further relay valve (2) arranged in a valve block is arranged according to any of Claims 1 to 6, wherein the relay valves (2) are connected via a common purge chamber (30).

9. Vehicle, in particular goods vehicle, **characterized by** at least one relay valve (2) according to any of Claims 1 to 6, and/or at least one valve device according to one of Claims 7 or 8.

10. Use of a relay valve (2) for a compressed air system in a motor vehicle, in particular a compressed air braking system in a goods vehicle, **characterized in that** the relay valve (2) is configured according to any of Claims 1 to 6, and the relay valve (2) is used in a valve device according to Claim 7 or in a vehicle according to Claim 9.

## Revendications

1. Vanne relais destinée à une installation d'air comprimé et comprenant un boîtier pourvu d'une entrée d'agent sous pression qui peut être reliée à une source d'agent sous pression, d'au moins une sortie d'agent sous pression qui peut être reliée à un consommateur, d'au moins une entrée de commande et d'au moins une purge (32) menant à l'atmosphère, et un piston de vanne relais (14) disposé dans le boîtier de manière à pouvoir coulisser le long d'un axe de piston de vanne relais (16),
un premier élément d'étanchéité (54) destiné à étanchéifier le piston de vanne relais (14) par rapport au boîtier, le premier élément d'étanchéité (54) étant fixé au boîtier,
un deuxième élément d'étanchéité (56) destiné à étanchéifier le piston de vanne relais (14) par rapport au boîtier, le deuxième élément d'étanchéité (56) étant disposé de manière fixe sur le piston de vanne relais (14),
un espace annulaire (58) délimité par le premier élément d'étanchéité (54), le deuxième élément d'étanchéité (56), le piston de vanne relais (14) et le boîtier, et
une liaison de l'espace annulaire (58) à l'atmosphère,
**caractérisée par**
une liaison de l'espace annulaire (58) à l'atmosphère au moyen d'un alésage axial (62) ménagé dans le piston de vanne relais (14) et débouchant dans une chambre de purge (30) et
un canal (60) ménagé dans le piston de vanne relais (14) et conçu pour relier l'alésage axial (62) à l'espace annulaire (58).

2. Vanne relais selon la revendication 1,
**caractérisée par**
une conception en deux parties du boîtier formée d'une première partie de boîtier (4) et d'une deuxième partie de boîtier (6), la deuxième partie de boîtier (6) étant conçue comme un couvercle de forme bidimensionnelle qui est relié de manière étanche à la première partie de boîtier (4).

3. Vanne relais selon l'une des revendications précédentes,
**caractérisée par**
une adaptation de la dimension de l'espace annulaire (58) de manière à produire un rapport prédéterminé, en particulier un rapport 1:1, d'une pression présente à la sortie d'agent sous pression à une pression de commande présente à l'entrée de commande.

4. Vanne relais selon l'une des revendications précédentes,
**caractérisée en ce que**
une partie d'une chambre de commande (22) reliée à l'entrée de commande est séparée en tant que volume d'amortissement (68), la chambre de commande (22) et le volume d'amortissement (68) étant reliés l'un à l'autre par le biais d'un étranglement (72).

5. Vanne relais selon la revendication 4,
**caractérisée en ce que**
la séparation du volume d'amortissement (68) de la chambre de commande (22) est effectuée par un diaphragme (70) et une ouverture ménagée au niveau du diaphragme agit comme un étranglement (72).

6. Vanne relais selon l'une des revendications 1 à 3,
**caractérisée en ce que**
un volume d'amortissement (76) est ménagé dans le piston de vanne relais (14), le volume d'amortissement (76) et une chambre de commande (22) reliée à l'entrée de commande étant reliés l'un à l'autre par le biais d'un étranglement (78).

7. Dispositif à vannes destiné à une installation d'air comprimé,
**caractérisé par**
une vanne relais (2) selon l'une des revendications 1 à 6.

8. Dispositif à vannes selon la revendication 7,
**caractérisé en ce que**
au moins une autre vanne relais (2) selon l'une des revendications 1 à 6 est disposée dans un bloc de vannes, les vannes relais (2) étant reliées par le biais d'une chambre de purge commune (30).

9. Véhicule, en particulier véhicule utilitaire,
**caractérisé par**
au moins une vanne relais (2) selon l'une des revendications 1 à 6 et/ou au moins un dispositif à vannes selon l'une des revendications 7 ou 8.

10. Utilisation d'une vanne relais (2) destinée à une installation d'air comprimé dans un véhicule automobile, en particulier un système de freinage à air comprimé d'un camion,
**caractérisée en ce que**
la vanne relais (2) est conçue selon l'une des revendications 1 à 6 et la vanne relais (2) est utilisée dans un dispositif à vannes selon la revendication 7 ou dans un véhicule selon la revendication 9.
